# DEMANDE DE BREVET EUROPEEN

(11) **EP 0 990 836 A1**
(43) Date de publication de la demande: **05.04.2000**
(21) Numéro de dépôt: 99401927.1
(22) Date de dépôt: 28.07.1999
(51) Int. Cl.: F17C 7/04, C01B 31/22

(54) **Conteneur de neige carbonique, et procédé et installation de fabrication d'un conteneur de neige carbonique**

(30) Priorité: 29.09.1998 FR 9812167
(71) Demandeur: Carboxyque Française, 92088 La Défense (FR)
(72) Inventeur: Benedetti, Xavier, 75007 Paris (FR); Buil, Jose, 94260 Fresnes (FR)
(74) Mandataire: Mellul, Sylvie Lisette

(57) **Abrégé**

Le conteneur comporte une enveloppe (1) contenant de la neige carbonique, présentant au moins un passage d'échappement de gaz sublimé : on dispose l'enveloppe (1) face à un dispositif (3) d'introduction de dioxyde de carbone liquide, on les rapproche jusqu'à ce que le dispositif (3) saille dans l'enveloppe (1), on transfère le dioxyde de carbone par le dispositif (3) et on le transforme dans l'enveloppe (1) en neige carbonique en évacuant le surplus de gaz, on interrompt le transfert, et on éloigne le dispositif (3) et le conteneur de neige carbonique formé, que l'on évacue ; l'installation comporte un dispositif d'introduction (3) où s'étend un canal de transfert du dioxyde de carbone, pouvant comporter un outil d'incision de l'enveloppe et un canal d'évacuation de gaz carbonique.

Utilisation : conservation de denrées périssables.

## Description

L'invention concerne un conteneur de neige carbonique sous la forme d'une enveloppe au moins partiellement emplie de neige carbonique, ainsi qu'un procédé et une installation de fabrication d'un conteneur de neige carbonique.

Il est connu que les produits congelés ou surgelés, notamment alimentaires devant être maintenus à basse température (de l'ordre de -20°C ou moins) sans rupture de leur chaîne de froid depuis leur congélation ou leur surgélation jusqu'à leur utilisation, nécessitent des entrepôts, moyens de transport, et magasins, munis d'installations de réfrigération, qui sont actuellement généralement électriques ; cependant, dans de nombreux cas, par exemple pour un transport non motorisé, il est impossible de transporter les produits sans les sortir de l'installation de réfrigération où ils sont entreposés, et les risques d'une remontée en température notable sont importants si les conditions climatiques sont défavorables ; en vue d'éviter une telle remontée en température lors de leur transport par exemple à la suite de leur vente « en quantité », il est habituel de disposer les produits congelés ou surgelés dans un environnement de glace, la glace étant procurée à l'acquéreur des produits par le fournisseur, généralement à titre gracieux. Une certaine méconnaissance des techniques du froid de la part des fournisseurs et des clients et le fait que le pouvoir réfrigérant de la glace est connu comme étant relativement faible, les conduit le plus souvent à surestimer volontairement, par précaution, la quantité de glace nécessaire, et il en résulte des dépenses inutiles importantes pour le fournisseur. On pourrait tenter de remplacer la glace par un produit relativement peu onéreux et présentant un meilleur pouvoir réfrigérant, mais il se révèle que le remplacement pur et simple de la glace par de tels produits peut être dangereux par suite de la très faible température à laquelle ces produits devraient être utilisés (-80°C environ pour de la neige carbonique) et ainsi du risque de lésions cutanées qu'occasionnerait leur utilisation sans davantage de précautions.

L'invention a pour but de remédier à ces inconvénients et de créer un produit sous la forme d'un conteneur de neige carbonique comportant une enveloppe et une dose de neige carbonique disposée à l'intérieur de cette enveloppe qui soit peu onéreux par suite notamment de la simplicité de son procédé et de son installation de fabrication, et de la possibilité d'automatiser ce procédé et cette installation à proximité immédiate du site d'utilisation.

A cette fin, l'invention concerne un conteneur de neige carbonique caractérisé en ce qu'il comporte une enveloppe et, dans cette enveloppe, du dioxyde de carbone dont une partie est à l'état solide et une autre partie est à l'état gazeux, et en ce que l'enveloppe présente au moins un passage pour l'échappement spontané de dioxyde de carbone à l'état gazeux.

Le conteneur peut également présenter une ou plusieurs des caractéristiques suivantes :
- l'enveloppe présente au moins un passage pour l'insertion d'un dispositif d'introduction du dioxyde de carbone, adapté pour assurer le transfert de dioxyde de carbone contenu dans une source de dioxyde de carbone, dans l'enveloppe ;
- le passage d'insertion du dispositif d'introduction est unidirectionnel ;
- le passage pour l'échappement spontané de dioxyde de carbone à l'état gazeux constitue également le passage pour l'insertion d'un dispositif d'introduction du dioxyde de carbone ;
- l'enveloppe présente plusieurs passages constitués par des perforations, pour l'échappement spontané de dioxyde de carbone à l'état gazeux ;
- l'enveloppe est en matériau poreux, ce matériau présentant des pores constituant des passages pour l'échappement spontané de dioxyde de carbone à l'état gazeux.

L'invention concerne également un procédé de fabrication d'un conteneur de neige carbonique comportant une enveloppe, et, dans cette enveloppe, du dioxyde de carbone dont une partie est à l'état solide, caractérisé en ce que l'on loge une enveloppe délimitant un espace intérieur dans un logement dans lequel on maintient l'enveloppe, en vis-à-vis d'un dispositif d'introduction de dioxyde de carbone à l'état liquide raccordé à une source de dioxyde de carbone sous pression à l'état liquide, on rapproche l'enveloppe et le dispositif d'introduction en mettant en mouvement au moins l'un d'entre eux puis on poursuit le mouvement jusqu'à ce qu'au moins une région d'extrémité du dispositif d'introduction soit dans l'espace intérieur de l'enveloppe, le dispositif d'introduction traversant l'enveloppe dans un passage de celle-ci, on interrompt le mouvement de rapprochement, on transfère à travers le dispositif d'introduction du dioxyde de carbone à l'état liquide de la source à l'espace intérieur où l'on fait passer le dioxyde de carbone à l'état liquide pour partie à l'état de solide pulvérulent et pour partie à l'état gazeux, et au fur et à mesure que l'on emplit l'espace intérieur par le solide pulvérulent, on évacue la phase gazeuse, puis on interrompt le transfert de dioxyde de carbone à l'état liquide, on retire la région d'extrémité du dispositif d'introduction de l'espace intérieur, on éloigne l'enveloppe et le dispositif d'introduction, et on évacue l'enveloppe contenant du dioxyde de carbone à l'état solide constituant le conteneur de neige carbonique et on laisse s'échapper la phase gazeuse en excès par au moins un passage de l'enveloppe.

Le procédé peut également comporter une ou plusieurs des caractéristiques suivantes :
- pour poursuivre le mouvement jusqu'à ce qu'au moins une région d'extrémité du dispositif d'introduction soit dans l'espace intérieur de l'enveloppe, on insère le dispositif d'introduction dans un passage de l'enveloppe ;
- pour poursuivre le mouvement jusqu'à ce qu'au moins une région d'extrémité du dispositif d'introduction soit dans l'espace intérieur de l'enveloppe, on incise l'enveloppe au moyen du dispositif d'introduction pour créer un passage dans l'enveloppe et on insère le dispositif d'introduction dans ce passage.

L'invention concerne aussi une installation de fabrication d'un conteneur de neige carbonique comportant une enveloppe, et, dans cette enveloppe, du dioxyde de carbone dont une partie est à l'état solide, caractérisée en ce qu'elle comporte un dispositif d'introduction de dioxyde de carbone à l'état liquide dans l'enveloppe, et ce dispositif d'introduction comporte un corps tubulaire dans lequel s'étend un canal, une tête portée par le corps pour traverser un passage de l'enveloppe, et des trous adaptés pour faire communiquer le canal avec l'intérieur de l'enveloppe lorsque la tête est au moins partiellement dans l'enveloppe.

L'installation peut également comporter une ou plusieurs des caractéristiques suivantes :
- le dispositif d'introduction comporte un outil d'incision pour inciser l'enveloppe en vue d'y réaliser un passage traversant, et un canal d'évacuation de dioxyde de carbone gazeux ;
- l'installation comporte un caisson dont une paroi porte le dispositif d'introduction, et un tiroir mobile entre une position ouverte d'amenée de l'enveloppe en vue de son remplissage et une position fermée de remplissage de l'enveloppe dans laquelle au moins une partie de la tête du dispositif d'introduction est à l'intérieur de l'enveloppe ;
- l'installation comporte un volet adapté pour former fond pour un tiroir coulissant, et lui-même coulissant indépendamment du tiroir ;
- l'installation comporte un puits d'évacuation des conteneurs, dont une partie supérieure est obturée ou dégagée sélectivement par un volet pivotant ;
- l'installation comporte une trémie d'alimentation en enveloppes, et le tiroir porte un capot solidarisé au dos de celui-ci et présentant une paroi sensiblement horizontale et s'étendant au niveau du haut du tiroir, adaptée pour obturer la base de la trémie sauf lorsque le tiroir est en position ouverte ;
- le dispositif d'introduction de dioxyde de carbone est relié à une source de dioxyde de carbone par l'intermédiaire d'une électrovanne, le dioxyde de carbone gazeux résiduel de l'installation en est évacué par l'intermédiaire d'un extracteur, et les conteneurs sont transmis à un bac depuis un puits d'évacuation par l'intermédiaire d'un appareil de comptage.

D'autres caractéristiques et avantages de l'invention apparaîtront à la lecture de la description qui va suivre de formes et de modes de réalisation de l'invention donnés à titre d'exemples non limitatifs, illustrés par les dessins joints dans lesquels :
- la figure 1 est une vue schématique en perspective d'une première forme de réalisation d'un conteneur selon l'invention ;
- la figure 2 est une vue schématique en perspective d'une deuxième forme de réalisation d'un conteneur selon l'invention ;
- la figure 3 est une vue de dessus montrant schématiquement une phase de la fabrication d'un conteneur selon la figure 1 (phase de conditionnement de la neige carbonique dans une enveloppe) ;
- la figure 4 est une vue schématique en perspective d'un appareil entrant dans la constitution d'une installation selon l'invention, pour une enveloppe selon la forme de réalisation de la figure 1, dans une position de réception de l'enveloppe ;
- la figure 5 est une vue schématique en perspective d'un appareil entrant dans la constitution d'une installation selon l'invention, pour une enveloppe selon la forme de réalisation de la figure 2, dans une position de réception de l'enveloppe ;
- la figure 6 est une vue schématique en perspective des appareils des figures 5 et 6 dans une position de conditionnement de neige carbonique dans l'enveloppe ;
- la figure 7 est une section longitudinale schématique d'une canule de conditionnement appartenant à une installation selon l'invention, dans une première forme de réalisation ;
- la figure 8 est une section longitudinale schématique d'une canule de conditionnement appartenant à une installation selon l'invention, dans une deuxième forme de réalisation ;
- la figure 9 est une section longitudinale d'une canule de conditionnement appartenant à une installation selon l'invention, dans une troisième forme de réalisation ;
- les figures 10A à 10E montrent schématiquement des phases successives de la fabrication d'un conteneur selon l'invention et plus précisément du conditionnement de neige carbonique dans une enveloppe pour un conteneur selon une troisième forme de réalisation ; et
- la figure 11 est un schéma synoptique d'une installation selon l'invention.

Le produit selon l'invention destiné à remplacer la glace en tant qu'agent réfrigérant pour accompagner par exemple dans leur transport des produits qui doivent temporairement être soustraits à une installation de réfrigération, est un conteneur de neige carbonique.

Ce conteneur comporte une enveloppe 1 et, dans cette enveloppe, du dioxyde de carbone dont une partie est à l'état solide, et plus précisément sous forme de neige carbonique, et une autre partie est à l'état gazeux. Comme le conteneur est destiné à être utilisé en milieu ambiant, la neige carbonique se sublime dans l'enveloppe, et il est nécessaire de permettre au dioxyde de carbone à l'état gazeux formé de s'échapper, faute de quoi la pression dans l'enveloppe augmenterait jusqu'à provoquer l'éclatement de celle-ci ; en vue de permettre un échappement spontané du dioxyde de carbone gazeux superflu, l'enveloppe comporte un ou plusieurs passages d'échappement.

Egalement, l'enveloppe doit comporter au moins un passage pour l'insertion d'un dispositif d'introduction du dioxyde de carbone, lequel dispositif d'introduction permet d'assurer le transfert de dioxyde de carbone contenu dans une source de dioxyde de carbone à laquelle il est relié, dans l'enveloppe ; ce même passage peut dans certains cas servir pour l'échappement du gaz, comme on le verra dans la suite.

La source de dioxyde de carbone est par exemple une bouteille de dioxyde de carbone sous pression à l'état liquide ; lorsque le dioxyde de carbone liquide sous pression libéré au moyen d'une électrovanne et transféré au moyen du dispositif d'introduction pénètre dans l'enveloppe, il se détend à la pression atmosphérique, ce qui engendre la formation d'un solide sous forme pulvérulente connu sous le nom de neige carbonique, à une température très inférieure à 0°C, de l'ordre de -80°C, et de dioxyde de carbone à l'état gazeux. Plus précisément, la consultation du diagramme de Mollier montre qu'une quantité donnée de dioxyde de carbone liquide sous une pression de 20 bars se transforme alors à raison de 53% en gaz et à raison de 47% en solide.

Dans la mesure où l'on fait en sorte de laisser échapper la phase gazeuse ici grâce au(x) passage(s) d'échappement, il est possible de remplir entièrement l'enveloppe de neige carbonique, et la pression sous laquelle s'accumule le dioxyde de carbone initialement pulvérulent dans l'enveloppe produit un compactage de la masse de poudre, qui prend un état très consistant, sans atteindre cependant l'état de glace (qui correspond à une pression de l'ordre de 200 bars au moins).

Il est possible de concevoir l'enveloppe 1 sous diverses formes, et si elle est en matériau souple, il est nécessaire d'une part qu'elle soit suffisamment résistante pour supporter la pression du dioxyde de carbone lors de son remplissage, et d'autre part suffisamment isolante thermiquement pour éviter tout risque de brûlure par le froid lors de ses manipulations ; ces deux propriétés peuvent être obtenues par le choix d'une épaisseur de matériau suffisamment importante ; dans le cas où le conteneur est destiné à une utilisation dans le domaine alimentaire, de plus, le matériau choisi doit naturellement être approprié à cette utilisation (papier, cartonnage, polyéthylène).

Dans une forme de réalisation, l'enveloppe 1 est en papier filtre ou poreux dont la perméabilité à l'air est comprise entre 200 et 400 l/m²/s. Les passages pour l'échappement spontané du dioxyde de carbone à l'état gazeux sont alors les pores du papier constituant l'enveloppe, tandis que la neige carbonique est retenue dans l'enveloppe. Dans cette forme de réalisation, avantageusement, l'enveloppe présente initialement un simple trou traversant, et à celle-ci est solidarisé un clapet 11 unidirectionnel par exemple à volets disposé de manière à obturer le trou traversant à moins qu'y soit inséré un dispositif d'introduction du dioxyde de carbone comme cela sera décrit dans la suite.

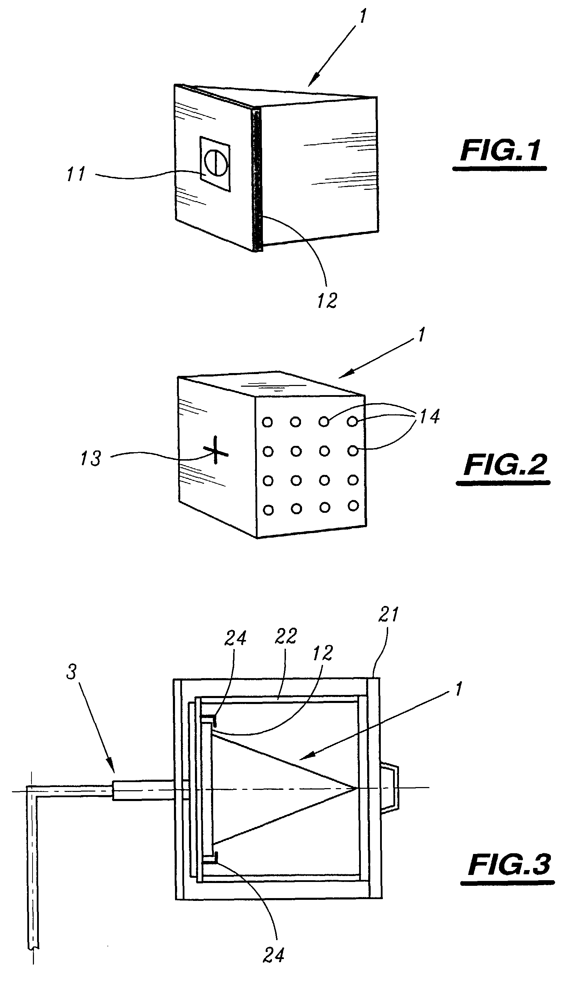

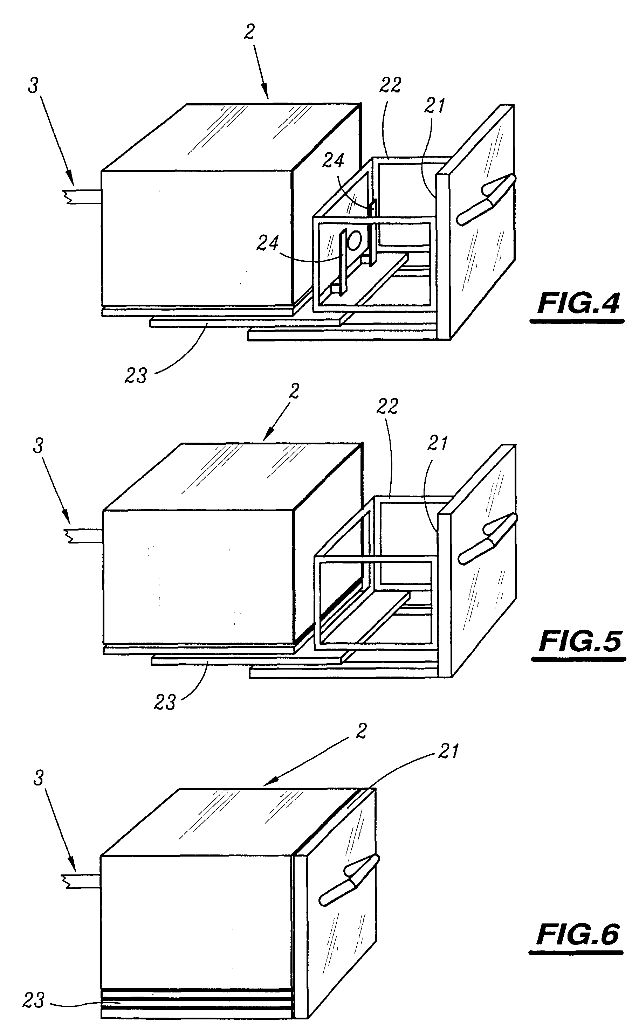

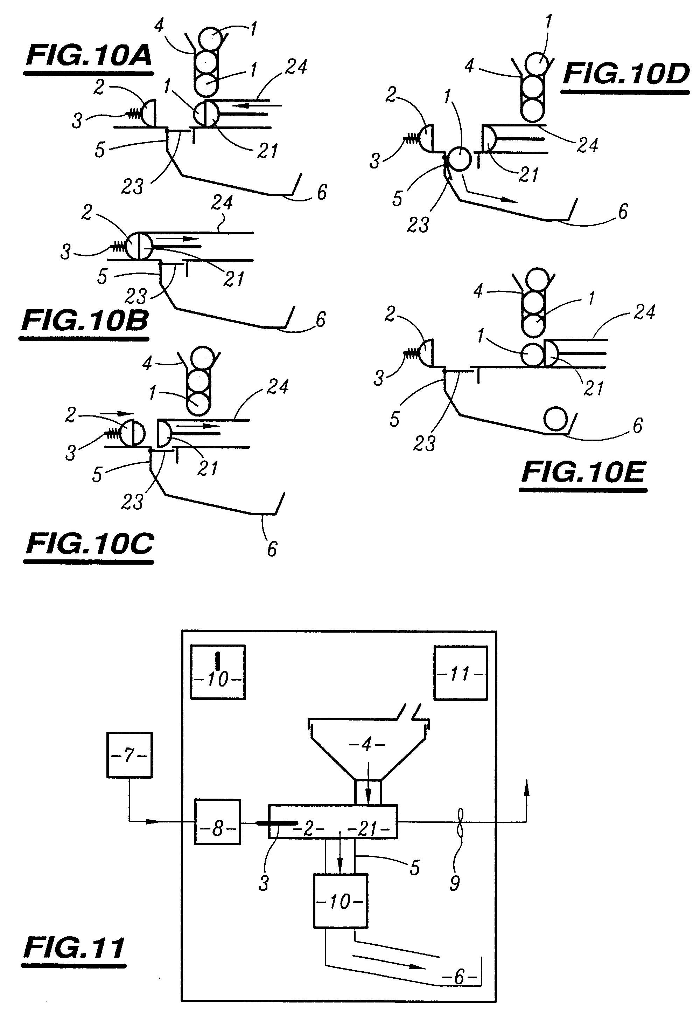

Géométriquement, cette enveloppe peut présenter des formes diverses, par exemple une forme approximativement prismatique à section triangulaire (figure 1) avec une base plane rapportée 12 en carton dans laquelle s'étend le trou traversant et qui est munie du clapet 11, la base présentant deux bords parallèles en saillie ou légèrement décollés facilitant sa mise en place dans des glissières (figures 3 et 4), à la manière d'un sac d'aspirateur, ou encore une forme parallélépipédique (figure 2) ou sphérique (figures 10A à 10E) facilitant sa mise en place dans un châssis de forme correspondante, en vue de son remplissage. En variante, le trou traversant et son clapet unidirectionnel peuvent être remplacés par une simple pré-découpe 13 constituée par une incision ou par deux incisions en croix dans l'une des faces de l'enveloppe 1. Dans les deux cas, l'enveloppe 1 peut n'être pas poreuse, mais les passages pour l'échappement spontané du dioxyde de carbone à l'état gazeux sont constitués par des perforations 14 réalisées dans celle-ci avant ou pendant le remplissage ; ces perforations peuvent par exemple être circulaires et présenter un diamètre de l'ordre de 4mm (figure 2).

Dans une autre forme de réalisation, l'enveloppe, pouvant être géométriquement de même forme que précédemment, n'est pas initialement munie d'un clapet ou d'une pré-découpe pour l'insertion du dispositif d'introduction du dioxyde de carbone, mais le passage pour ce dispositif est créé par un outil dont est muni le dispositif lui-même, que l'on insère à force dans l'enveloppe (dont les caractéristiques mécaniques sont convenablement choisies), comme on le verra dans la suite.

L'échappement du dioxyde de carbone gazeux au fur et à mesure du remplissage de l'enveloppe peut également être assuré non pas par des pores ou des perforations de celle-ci, mais par des moyens spécialement prévus à cette fin dans le dispositif d'introduction, comme on le verra également dans la suite, l'échappement après remplissage étant alors assuré par le passage où était précédemment inséré le dispositif d'introduction de dioxyde de carbone. Cette caractéristique est particulièrement bien adaptée à la forme de réalisation dans laquelle le dispositif d'introduction de dioxyde de carbone crée son propre passage, car de préférence l'enveloppe ne présente alors pas de pores ou de perforations permettant une évasion significative du dioxyde de carbone à l'état gazeux afin de ne pas compromettre sa rigidité lors de son percement. Le remplissage des enveloppes notamment des figures 1 et 2 peut être effectué dans un caisson de remplissage 2 tel que celui des figures 4 à 6, dont une paroi arrière ici approximativement verticale porte le dispositif 3 d'introduction de dioxyde de carbone, et qui est adapté pour recevoir un tiroir coulissant 21 auquel est associé un châssis 22 de forme appropriée pour que les enveloppes 1 puissent y être immobilisées.

Plus précisément, le tiroir 21 est mobile entre une position ouverte dans laquelle on introduit une enveloppe en vue de son remplissage et on évacue ensuite l'enveloppe emplie de neige carbonique constituant le conteneur de neige carbonique (figures 4 et 5 correspondant respectivement aux enveloppes des figures 1 et 2), et une position fermée dans laquelle on emplit l'enveloppe (figure 6) . A cette fin, le dispositif d'introduction 3 est réalisé sous la forme d'une canne ou d'une canule s'étendant approximativement perpendiculairement à la paroi arrière du caisson 2 et dont une extrémité comportant des trous d'injection est à l'intérieur du caisson, et le mouvement de coulissement du tiroir 21 est un mouvement de translation rectiligne en va-et-vient dans la direction dans laquelle s'étend le dispositif d'introduction 3. Un volet 23 approximativement horizontal formant fond est monté lui-même coulissant dans la même direction que le tiroir 21, indépendamment de celui-ci. Comme, dans la position ouverte du tiroir, d'introduction de l'enveloppe, le châssis 22 est au-dessus d'un puits d'évacuation des conteneurs (non représenté sur les figures 4 à 6), le fond 23 est alors disposé sous le châssis 22 afin de soutenir l'enveloppe et l'empêcher de tomber dans le puits d'évacuation ; lorsque le tiroir est actionné vers la position fermée, le fond 23 est poussé par la face avant du tiroir à l'intérieur du caisson ; à la fin du mouvement de fermeture, l'enveloppe 1 arrive au contact du dispositif d'introduction 3 et, le mouvement se poursuivant, la tête de celui-ci pénètre dans l'enveloppe en traversant le clapet ou la pré-découpe de celle-ci, ou encore en créant elle-même son passage, selon la forme de réalisation, le dioxyde de carbone liquide est introduit dans l'enveloppe en formant de la neige carbonique et du gaz, puis l'arrivée du dioxyde de carbone est interrompue ; ensuite, le tiroir est ramené vers la position ouverte tandis que le fond 23 reste à l'intérieur du caisson, et ainsi, lorsque le tiroir est en position complètement ouverte, le conteneur de neige carbonique tombe par gravité dans le puits d'évacuation. Dans les formes de réalisation des figures 4 à 6, le châssis 22 présente une forme parallélépipédique.

Dans la forme de réalisation des figures 3 et 4, le tiroir 21 présente une paroi arrière approximativement verticale à proximité de laquelle s'étendent également verticalement deux barres formant glissière 24 dont la base est fixée à la base du châssis 22.

Ainsi, une enveloppe telle que celle de la figure 1, que l'on a disposée au-dessus du châssis 22 lorsque le tiroir 21 est en position ouverte de telle sorte que sa base rapportée 12 soit en alignement avec l'espace entre les glissières 24 et la paroi arrière du tiroir, peut être par translation verticale logée dans le châssis en étant par sa base appliquée contre ou à proximité immédiate de cette paroi arrière ; dans cette forme de réalisation, la paroi arrière du tiroir est percée d'un trou traversant en regard de celui de l'enveloppe 1 afin de permettre le passage du dispositif d'introduction 3.

Dans la forme de réalisation de la figure 5, le châssis 21 présente approximativement la même forme que l'enveloppe de la figure 2 qu'il doit loger, avec des dimensions à peine supérieures, et il n'est pas nécessaire que le tiroir 21 présente une paroi arrière.

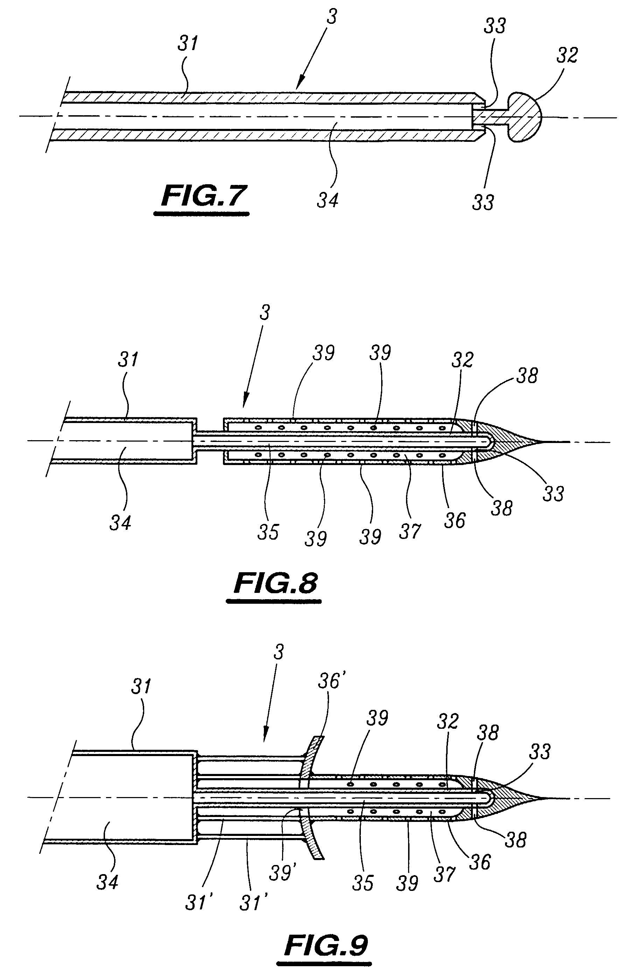

Le dispositif d'introduction 3 de dioxyde de carbone de la figure 7 est une canule destinée à introduire du dioxyde de carbone liquide dans une enveloppe à clapet ou à pré-découpe ; cette canule comporte sur pratiquement toute sa longueur un corps tubulaire 31 de forme générale cylindrique dont une extrémité (non représentée) est destinée à être reliée à la source de dioxyde de carbone par un conduit en passant par une électrovanne de commande, et dont l'autre extrémité porte une tête 32 raccordée au corps par une gorge ; l'extrémité du corps 31 portant la tête 32 présente des trous traversants 33 calibrés débouchant autour de la gorge, et répartis au moins approximativement régulièrement autour de celle-ci (par exemple quatre trous répartis à 90°) ; les trous 33 ont pour but de faire communiquer l'intérieur de la canule, c'est-à-dire un canal longitudinal 34, avec l'extérieur, pour introduire le dioxyde de carbone dans l'enveloppe quand la tête et une partie du corps de la canule sont à l'intérieur de celle-ci. La tête présente une extrémité libre arrondie, par exemple en calotte sphérique ou hémisphérique pour repousser doucement le clapet 11 ou les bords de la pré-découpe 13 de l'enveloppe lors de l'approche de l'enveloppe contenue dans le tiroir 21. Cette canule est destinée au remplissage d'enveloppes dont les passages d'évacuation de dioxyde de carbone gazeux sont des pores ou des perforations réalisés à cette fin.

Le dispositif 3 de la figure 8 comporte également un corps 31 creux, mais ce corps porte à l'opposé de son extrémité destinée à être reliée à la source de dioxyde de carbone, une tête 32 de plus petit diamètre et allongée qui s'étend dans l'alignement du corps 31 et qui elle-même présente un canal 35 aligné coaxialement avec le canal 34 du corps et se raccordant à lui ; la tête présente ici également une extrémité arrondie pouvant être hémisphérique ; en revanche, dans cette forme de réalisation, ce n'est pas le corps 31 qui est percé de trous d'introduction de dioxyde de carbone, mais la tête allongée 32 est munie à proximité de son extrémité distale de quelques trous (par exemple quatre trous) traversants 33 calibrés répartis approximativement régulièrement.

Comme cette forme de réalisation est destinée à être utilisée avec des enveloppes sans perforation appropriée réalisée préalablement, en vue de créer son propre passage dans l'enveloppe, elle est équipée d'un outil d'incision 36 pouvant être interchangeable ; cet outil d'incision 36 est réalisé sous la forme d'une lame creuse à l'intérieur de laquelle est logée la tête allongée 32 sauf dans sa zone de raccordement au corps 31 ; comme elle est de plus destinée à être utilisée avec des enveloppes sans pores ni perforations d'échappement, elle est entourée, sauf à proximité de son extrémité distale, par un canal annulaire 37. La lame 36 est effilée d'une part en direction et au-delà de l'extrémité distale de la tête 31 de manière à présenter une extrémité libre coupante, et d'autre part, en section transversale, de part et d'autre de la tête 31, c'est-à-dire en allant vers l'avant et en allant vers l'arrière du plan de coupe de la figure 8, de manière à présenter deux tranchants latéraux. La lame 36 est percée de trous 38 en regard des trous 33 de la tête pour permettre le passage du dioxyde de carbone liquide vers l'enveloppe ; elle est également percée de trous 39 faisant communiquer le canal 37 avec l'extérieur, puisqu'étant destinée à être utilisée avec une enveloppe sans pores notables ni trous d'évacuation du dioxyde de carbone gazeux, elle doit permettre de laisser s'échapper de l'enveloppe le surplus de celui-ci ; grâce à cette structure, lors de sa translation, l'enveloppe est percée par l'extrémité effilée de la lame 36 et incisée par les tranchants latéraux de celle-ci, et le mouvement de translation de l'enveloppe est interrompu lorsqu'une partie notable (par exemple les deux tiers) de la longueur de la lame 36 est à l'intérieur de l'enveloppe ; alors, le dioxyde de carbone liquide est transmis au dispositif 3 et peut s'écouler dans l'enveloppe par les trous 33 de la tête et 38 de la lame ; le surplus de dioxyde de carbone gazeux traverse ceux des trous 39 de la lame en communication avec le canal annulaire 37 qui sont à l'intérieur de l'enveloppe, parcourt le canal annulaire 37 en direction du corps 31, et s'échappe à l'extérieur par ceux des trous 39 de la lame qui sont à l'extérieur de l'enveloppe.

Le dispositif d'introduction 3 dans la forme de réalisation de la figure 9 est destiné à être utilisé ici avec des enveloppes présentant des formes arrondies, par exemple sphériques, en vue d'améliorer le positionnement relatif de l'enveloppe et de la canule. Cette forme de réalisation présente approximativement la même structure que celle de la figure 8 ; cependant, elle comporte de plus une butée 36' destinée à s'appliquer contre l'enveloppe et limitant la pénétration de la tête allongée 31 entourée de la lame 37 dans l'enveloppe 1 à l'endroit désiré. Cette butée 36' a une forme correspondant à celle de l'enveloppe, ici en calotte sphérique ; dans cette forme de réalisation, la lame 36 ne se prolonge pas en direction du corps 31 entre la butée 36' et le corps, et il suffit que la butée comporte une lumière annulaire 39' autour de la tête 31 et que l'espace entre la butée et le corps ne soit pas entièrement clos périphériquement pour que le dioxyde de carbone gazeux pénétrant dans le canal annulaire 37 par les trous 39 puisse s'échapper à l'extérieur à travers la lumière annulaire 39' ; dans la forme de réalisation de la figure 9, la butée 36' est portée par des tigettes 31' soudées au corps 31 et formant autour de la tête 32 une cage d'écureuil par les espaces de laquelle le dioxyde de carbone gazeux peut s'échapper ; afin de faciliter la fixation des tigettes 31', le corps 31 représenté sur la figure 9 présente un plus grand diamètre que celui de la figure 8.

On peut noter que grâce au fait que l'on laisse échapper le surplus de gaz carbonique (à -78,5°C), on assure un sous-refroidissement du dioxyde de carbone liquide et un rendement de transformation en neige carbonique supérieur à 47%.

Les figures 10A à 10E concernent plus particulièrement un conteneur sphérique dont l'enveloppe 1 est en polyéthylène et présente un diamètre par exemple d'une dizaine de centimètres, la partie de l'installation de fabrication de ce conteneur qui est représentée étant une variante proche de ce qui a été décrit précédemment. Cette partie d'installation permet de loger partiellement les enveloppes 1 dans un caisson 2 dont une paroi porte un dispositif d'introduction 3 de dioxyde de carbone, au moyen d'un tiroir 21, de percer ces enveloppes, d'introduire le dioxyde de carbone, et d'évacuer les conteneurs constitués de l'enveloppe contenant de la neige carbonique ; le caisson et le tiroir présentent une forme générale hémisphérique dont les dimensions intérieures sont adaptées pour loger avec un faible jeu les enveloppes 1 sphériques et sont tous deux mobiles en translation. Au dos du tiroir 21 est ici solidarisé un capot présentant une paroi 24 sensiblement horizontale s'étendant au niveau du haut du tiroir 21, jouant un rôle de clapet comme on le verra ci-après.

Une trémie 4 d'alimentation en enveloppes 1 est disposée avec sa base légèrement au-dessus du niveau de la paroi 24, à un emplacement tel que la paroi 24 obture la base de la trémie sauf lorsque le tiroir 21 est dans une position complètement ouverte montrée par la figure 10E. Un puits d'évacuation 5 disposé entre le caisson 2 et l'aplomb de la trémie 4, débouche à sa partie supérieure au niveau de la base du caisson 2 et du tiroir 21 ; cette partie supérieure du puits d'évacuation 5 est obturée ou dégagée sélectivement par un volet 23 formant fond qui ici n'est pas coulissant comme précédemment (figures 4 à 6) mais pivotant autour d'un axe horizontal de manière à pouvoir être escamoté dans le puits pour livrer passage aux conteneurs lors de leur évacuation ; la partie inférieure du puits 5 débouche dans un bac 6 où les conteneurs de neige carbonique peuvent être prélevés par exemple manuellement.

La succession des opérations est la suivante : une enveloppe 1 sphérique étant à demi logée dans le tiroir 21, le tiroir est rapproché par coulissement du caisson 2 à l'intérieur duquel fait saillie le dispositif d'introduction 3 ici de préférence comme décrit en référence à la figure 9, le volet 23 étant dans sa position d'obturation du puits 5 (figure 10A) ; lors de la fin de la course de rapprochement, l'enveloppe 1 est incisée par le dispositif 3, et lorsque le tiroir 21 est appliqué contre le caisson 2, l'introduction de dioxyde de carbone liquide est commandée ; dès qu'il pénètre dans l'enveloppe, le liquide se détend en formant de la neige carbonique et du gaz carbonique dont le surplus peut s'échapper comme cela a été mentionné en référence à la figure 9 ; pendant tout ce temps, la base de la trémie est obturée par la paroi 24 ; lorsque l'enveloppe est pratiquement pleine (figure 10B), le tiroir 21 est ramené de sa position fermée vers sa position ouverte. Puis, le caisson 2 est lui-même ramené par coulissement en direction du tiroir 21 (figure 10C) jusqu'à ce que le conteneur de neige carbonique (enveloppe emplie de dioxyde de carbone) parvienne au-dessus du volet 23 pivotant. Alors, le volet ou fond 23 est commandé pour s'escamoter dans le puits 5, ou encore le poids du conteneur provoque l'escamotage du fond 23, et le conteneur pénètre dans le puits 5 (figure 10D) pour parvenir au bac 6. Un recul supplémentaire du tiroir 21 amène la paroi 24 à un emplacement où elle n'obture plus la base de la trémie 4, et une autre enveloppe 1 s'échappe de la trémie et vient se placer devant le tiroir 21 (figure 10E), et un autre cycle peut commencer.

La figure 11 montre les principaux éléments de la totalité d'une installation automatique selon l'invention pouvant être utilisée en libre service au moyen d'un « monnayeur ». Cette figure 11 montre le caisson 2 dans lequel débouche le dispositif d'introduction 3 de dioxyde de carbone relié à une source 7 de dioxyde de carbone liquide telle qu'une bouteille de dioxyde de carbone liquide à une pression de 20 bars, par l'intermédiaire d'une électrovanne 8 activée en liaison avec une minuterie (non représentée). Le tiroir 21 coulissant est surmonté par la trémie 4, et, le puits d'évacuation 5 débouche à sa partie supérieure sous le tiroir 21 et à sa partie inférieure dans un bac 6. Un extracteur par exemple à hélice 9 relié au tiroir 21 qui doit être relativement étanche pour constituer un espace quasi-confiné, est prévu pour rejeter à l'extérieur au moyen d'un conduit de sortie le dioxyde de carbone à l'état gazeux contenu dans le tiroir à la suite du remplissage. Des moyens (non représentés) peuvent être prévus pour réchauffer certains éléments du caisson 2 et/ou du tiroir 21 et/ou du dispositif d'introduction 3 (notamment la tête de celui-ci) pour éviter la formation de glace hydrique ou carbonique.

Un appareil de contrôle 10 est inséré dans le puits 5 ou entre le puits 5 et le bac 6 pour compter les conteneurs délivrés, afficher le(s) résultat(s) du comptage (par exemple afficher au moyen d'un premier afficheur un résultat journalier et au moyen d'un deuxième afficheur un résultat total), et éventuellement peser les conteneurs pour vérifier le fonctionnement de l'installation.

Un appareil de télésurveillance 11 permet de contrôler le niveau de stockage des enveloppes, le comptage, le fonctionnement d'une alarme, et de détecter les dysfonctionnements de l'installation.

La trémie 4 peut être prévue pour contenir quelques dizaines d'enveloppes et recevoir un élément adaptable permettant de tripler ou quadrupler la capacité ; elle comporte un détecteur et une alerte de remplissage (non représentés) pour alerter l'exploitant de l'installation lorsque le nombre d'enveloppes descend à une dizaine.

Le processus de fabrication des conteneurs mis en oeuvre lors du fonctionnement de cette installation est le suivant :
A la suite de l'introduction d'un jeton ou d'une pièce de monnaie appropriée, le tiroir 21 est amené dans une position permettant l'introduction dans celui-ci d'une enveloppe par un simple écoulement par gravité depuis la trémie 4. L'enveloppe est transférée au dispositif d'introduction 3 de dioxyde de carbone liquide qui éventuellement la perce, à moins que cette opération ait été effectuée préalablement dans l'installation elle-même par un outil interchangeable ou à l'extérieur de celle-ci, puis laisse écouler le dioxyde de carbone après activation de l'électrovanne 8, pendant une durée prédéterminée par la minuterie. A l'issue de la durée prédéterminée, le tiroir est rétracté et le conteneur formé est évacué par un simple écoulement par gravité dans le puits 5, et de là dans le bac 6 après une phase de contrôle lors de son passage au niveau de l'appareil de contrôle 10. Le conteneur étant dans le bac 6 peut ensuite être prélevé. Le temps qui s'écoule entre l'introduction du jeton ou de la pièce de monnaie et l'arrivée du conteneur de neige carbonique dans le bac est de quelques secondes seulement, par exemple environ 7 secondes.

Dans l'hypothèse où l'installation est destinée au public, le fonctionnement est discontinu et permet entre une dizaine et une quinzaine de mises en service par heure pendant par exemple une douzaine d'heures par jour.

L'installation peut également être implantée en atelier, dans une version conçue pour un fonctionnement continu pendant par exemple sept heures par jour, ou deux périodes de sept heures par jour séparées par une heure de repos ; dans ce cas, l'écoulement des conteneurs peut être prolongé par une goulotte vers un réceptacle en hauteur (de l'ordre de un mètre par exemple).

## Revendications

1. Conteneur de neige carbonique caractérisé en ce qu'il comporte une enveloppe (1) et, dans cette enveloppe, du dioxyde de carbone dont une partie est à l'état solide et une autre partie est à l'état gazeux, et en ce que l'enveloppe présente au moins un passage (14) pour l'échappement spontané de dioxyde de carbone à l'état gazeux.

2. Conteneur selon la revendication 1, caractérisé en ce que l'enveloppe (1) présente au moins un passage pour l'insertion d'un dispositif d'introduction du dioxyde de carbone, adapté pour assurer le transfert de dioxyde de carbone contenu dans une source (7) de dioxyde de carbone, dans l'enveloppe (1).

3. Conteneur selon la revendication 2, caractérisé en ce que le passage d'insertion du dispositif d'introduction est unidirectionnel.

4. Conteneur selon la revendication 2 ou 3, caractérisé en ce que le passage pour l'échappement spontané de dioxyde de carbone à l'état gazeux constitue également le passage pour l'insertion d'un dispositif d'introduction du dioxyde de carbone.

5. Conteneur selon l'une quelconque des revendications 1 à 4, caractérisé en ce que l'enveloppe (1) présente plusieurs passages constitués par des perforations (14), pour l'échappement spontané de dioxyde de carbone à l'état gazeux.

6. Conteneur selon l'une quelconque des revendications 1 à 5, caractérisé en ce que l'enveloppe (1) est en matériau poreux, ce matériau présentant des pores constituant des passages pour l'échappement spontané de dioxyde de carbone à l'état gazeux.

7. Procédé de fabrication d'un conteneur de neige carbonique comportant une enveloppe (1), et, dans cette enveloppe, du dioxyde de carbone dont une partie est à l'état solide, caractérisé en ce que l'on loge une enveloppe (1) délimitant un espace intérieur dans un logement dans lequel on maintient l'enveloppe, en vis-à-vis d'un dispositif (3) d'introduction de dioxyde de carbone à l'état liquide raccordé à une source (7) de dioxyde de carbone sous pression à l'état liquide, on rapproche l'enveloppe et le dispositif d'introduction en mettant en mouvement au moins l'un d'entre eux puis on poursuit le mouvement jusqu'à ce qu'au moins une région d'extrémité du dispositif d'introduction soit dans l'espace intérieur de l'enveloppe, le dispositif d'introduction (3) traversant l'enveloppe (1) dans un passage de celle-ci, on interrompt le mouvement de rapprochement, on transfère à travers le dispositif d'introduction du dioxyde de carbone à l'état liquide de la source (7) à l'espace intérieur où l'on fait passer le dioxyde de carbone à l'état liquide pour partie à l'état de solide pulvérulent et pour partie à l'état gazeux, et au fur et à mesure que l'on emplit l'espace intérieur par le solide pulvérulent, on évacue la phase gazeuse, puis on interrompt le transfert de dioxyde de carbone à l'état liquide, on retire la région d'extrémité du dispositif d'introduction de l'espace intérieur, on éloigne l'enveloppe et le dispositif d'introduction, et on évacue l'enveloppe contenant du dioxyde de carbone à l'état solide constituant le conteneur de neige carbonique et on laisse s'échapper la phase gazeuse en excès par au moins un passage (14) de l'enveloppe.

8. Procédé selon la revendication 7, caractérisé en ce que, pour poursuivre le mouvement jusqu'à ce qu'au moins une région d'extrémité du dispositif d'introduction (3) soit dans l'espace intérieur de l'enveloppe (1), on insère le dispositif d'introduction dans un passage de l'enveloppe.

9. Procédé selon la revendication 7, caractérisé en ce que, pour poursuivre le mouvement jusqu'à ce qu'au moins une région d'extrémité du dispositif d'introduction (3) soit dans l'espace intérieur de l'enveloppe (1), on incise l'enveloppe au moyen du dispositif d'introduction pour créer un passage dans l'enveloppe et on insère le dispositif d'introduction dans ce passage.

10. Installation de fabrication d'un conteneur de neige carbonique comportant une enveloppe (1), et, dans cette enveloppe, du dioxyde de carbone dont une partie est à l'état solide, caractérisée en ce qu'elle comporte un dispositif (3) d'introduction de dioxyde de carbone à l'état liquide dans l'enveloppe, et ce dispositif d'introduction comporte un corps (31) tubulaire dans lequel s'étend un canal (34), une tête (32) portée par le corps pour traverser un passage de l'enveloppe, et des trous (33) adaptés pour faire communiquer le canal avec l'intérieur de l'enveloppe lorsque la tête est au moins partiellement dans l'enveloppe.

11. Installation selon la revendication 10, caractérisée en ce que le dispositif (3) d'introduction comporte un outil d'incision (36) pour inciser l'enveloppe (1) en vue d'y réaliser un passage traversant, et un canal (37) d'évacuation de dioxyde de carbone gazeux.

12. Installation selon la revendication 10, caractérisée en ce qu'elle comporte un caisson (2) dont une paroi porte le dispositif d'introduction (3), et un tiroir (21) mobile entre une position ouverte d'amenée de l'enveloppe (1) en vue de son remplissage et une position fermée de remplissage de l'enveloppe dans laquelle au moins une partie de la tête (32) du dispositif d'introduction (3) est à l'intérieur de l'enveloppe.

13. Installation selon la revendication 10, caractérisée en ce qu'elle comporte un volet (3) adapté pour former fond pour un tiroir (21) coulissant, et lui-même coulissant indépendamment du tiroir.

14. Installation selon la revendication 10, caractérisée en ce qu'elle comporte un puits (5) d'évacuation des conteneurs, dont une partie supérieure est obturée ou dégagée sélectivement par un volet (23) pivotant.

15. Installation selon la revendication 12, caractérisée en ce qu'elle comporte une trémie (4) d'alimentation en enveloppes (1), et le tiroir (21) porte un capot solidarisé au dos de celui-ci et présentant une paroi (24) sensiblement horizontale et s'étendant au niveau du haut du tiroir (21), adaptée pour obturer la base de la trémie sauf lorsque le tiroir (21) est en position ouverte.

16. Installation selon la revendication 12, caractérisée en ce que le dispositif d'introduction (3) de dioxyde de carbone est relié à une source (7) de dioxyde de carbone par l'intermédiaire d'une électrovanne (8), le dioxyde de carbone gazeux résiduel de l'installation en est évacué par l'intermédiaire d'un extracteur (9), et les conteneurs sont transmis à un bac (6) depuis un puits d'évacuation (5) par l'intermédiaire d'un appareil de comptage (10).
